# EUROPÄISCHE PATENTSCHRIFT

(11) **EP 2 213 548 B1**
(45) Veröffentlichungstag und Bekanntmachung des Hinweises auf die Patenterteilung: **18.03.2015**
(21) Anmeldenummer: 10000609.7
(22) Anmeldetag: 21.01.2010
(51) Int. Cl.: B62D 12/00

(54) **Knickgelenktes Fahrzeug**
Articulated vehicle
Véhicule à direction à pivot

(30) Priorität: 02.02.2009 DE 102009007092
(43) Veröffentlichungstag der Anmeldung: 04.08.2010
(73) Patentinhaber: BOMAG GmbH, 56154 Boppard (DE)
(72) Erfinder: Ponstein, Joachim, 56283 Gondershausen (DE)
(74) Vertreter: Lang, Friedrich

(56) Entgegenhaltungen:
- DE-A1- 4 219 635
- US-A1- 2002 140 204

## Beschreibung

Die Erfindung betrifft ein knickgelenktes Fahrzeug, insbesondere ein knickgelenktes Baufahrzeug oder eine Baumaschine, welches einen Vorder- und einen Hinterrahmen, ein Knicklenkgetriebe mit einem ersten Verbindungsglied, wobei das erste Verbindungsglied über zwei Drehgelenke am Vorder- und am Hinterrahmen angelenkt ist, und einen Lenkantrieb, welcher über Anlenkpunkte am Vorder- und am Hinterrahmen angelenkt ist, umfasst. Das Knicklenkgetriebe weist eine erste und eine zweite vertikale Knickachse auf, die voneinander beabstandet angeordnet sind, wobei das Knicklenkgetriebe in einem ersten Lenkbereich zur relativen Verschwenkung des Vorder- und des Hinterrahmens um die erste Knickachse und in einem zweiten Lenkbereich zur relativen Verschwenkung des Vorder- und des Hinterrahmens um die zweite Knickachse ausgebildet ist, wobei der erste und der zweite Lenkbereich über eine Nullstellung voneinander getrennt sind.

Dank hervorragender Manövrierbarkeit und Wendigkeit, die auf vergleichsweise großen Lenkwinkeln und kleinen Wenderadien basieren, hat sich die Knicklenkung bei Fahrzeugen mit mindestens zwei Fahrzeugrahmen, die jeweils mindestens eine starre Achse aufweisen, als Lenkungsart durchgesetzt. Insbesondere Baufahrzeuge, wie beispielsweise Vibrationswalzen mit zwei Fahrzeugrahmen, in denen jeweils eine Bandage gelagert ist, werden oftmals mit Hilfe der Knicklenkung gesteuert.

Bei herkömmlichen knickgelenkten Fahrzeugen wird häufig ein zentrales Knickgelenk verwendet, welches die beiden Fahrzeugrahmen auf der Symmetrieachse in Längsrichtung, nämlich der Längsmittelachse, verbindet. Als Lenkantrieb kommt dabei meist ein doppeltwirkender Hydraulikzylinder zum Einsatz, welcher mit seinen Enden an den beiden Fahrzeugrahmen angelenkt ist. Je nach gewünschter Fahrtrichtungsänderung wird die Kolbenstange des Hydraulikzylinders durch Druckmittelbetätigung ausgefahren bzw. eingezogen, so dass in Fahrtrichtung betrachtet entweder die linken oder die rechten Seitenkanten der Fahrzeugrahmen relativ zueinander verschwenkt werden.

Der maximal einstellbare Knick- bzw. Lenkwinkel eines solchen zentralen Knickgelenks ergibt sich aus dem geometrischen Zusammenhang. Je kleiner der Abstand zwischen dem Vorderrahmen und dem Hinterrahmen wird, desto kleiner wird der maximal einstellbare Lenkwinkel, da ansonsten die Kanten der Fahrzeugrahmen aneinanderstoßen. Wenn zur Verbesserung der Manövrierbarkeit ein größerer Lenkwinkel angestrebt wird, führt dies zwangsläufig zur Vergrößerung des Freiraums zwischen den Rahmenkanten, in dem sich das Knickgelenk befindet, wodurch diverse Nachteile entstehen. Zum einen wird die Gesamtlänge des Fahrzeugs vergrößert, woraus sich Schwierigkeiten beim Transport etc. ergeben können. Ferner führt die Vergrößerung des Freiraums zwischen den Rahmenkanten in Längsrichtung zur Erhöhung des Achsabstands, wodurch bei gleichbleibendem Lenkeinschlag der Wenderadius vergrößert wird. Des Weiteren ist die Vergrößerung des Abstands zwischen den Fahrzeugrahmen auch mit einem erhöhten Materialverbrauch verbunden. Alternativ können zur Erhöhung des Lenkeinschlags statt der Abstandsvergrößerung zwischen den Fahrzeugrahmen die kritischen Rahmenaußenkantenbereiche, insbesondere Eckbereiche, die den Lenkeinschlag durch ein Aneinanderstoßen begrenzen, ausgespart und mit einem Radius versehen werden. Zwar wird hierbei die Baulänge nicht vergrößert, allerdings sind die ausgesparten Bereiche verloren, so dass der Platz in oder an den Fahrzeugrahmen zur Anordnung von Maschinenkomponenten verringert wird.

Bei kleineren Baumaschinen, wie beispielsweise Grabenwalzen, wird eine möglichst kurze Baulänge angestrebt, wobei immer noch genügend Platz zur Anordnung von Maschinenkomponenten vorhanden sein muss. Gleichzeitig ist es erforderlich, dass die Grabenwalze einen möglichst großen Lenkwinkel ausführen kann, um auch in engen und kurvenreichen Gräben wendig zu sein.

Aus der DE 42 19 635 A1 ist ein knickgelenktes Landfahrzeug bekannt, welches zwei voneinander beabstandete Schwenkachsen aufweist. Nachteilig bei dieser bekannten Knicklenkung ist, dass die Stellorgane zur Lenkung des Fahrzeugs prinzipbedingt einen relativ großen Bauraum in Längsrichtung des Fahrzeugs benötigen. Zudem ist es nachteilig, dass für die Schwenkbewegung um eine der beiden Schwenkachsen jeweils ein separates Stellorgan, beispielsweise ein Hydraulikzylinder, benötigt wird, wodurch insgesamt der Kosten- und der Steuerungsaufwand steigen.

Daher ist es die Aufgabe der Erfindung, ein einfach zu bedienendes, knickgelenktes Fahrzeug anzugeben, bei welchem trotz verkürzter Baulänge ein großer Lenkwinkel eingestellt werden kann, ohne dass die Rahmenkanten beim Lenkvorgang aneinander stoßen und ohne dass die Volumina der Fahrzeugrahmen verkleinert werden, so dass genügend Platz zur Anordnung von Maschinenkomponenten vorhanden ist.

Die Aufgabe wird gelöst dadurch gelöst, dass das Knicklenkgetriebe ein zweites Verbindungsglied aufweist, welches über zwei weitere Drehgelenke gegensinnig zum ersten Verbindungsglied am Vorder- und am Hinterrahmen angelenkt ist, wobei die Längsachse des zweiten Verbindungsglieds in der Nullstellung parallel zur Längsachse des ersten Verbindungsglieds ist und wobei die Drehachsen der Drehgelenke des zweiten Verbindungsglieds in der Nullstellung jeweils koaxial zu den Drehachsen der Drehgelenke des ersten Verbindungsglieds angeordnet sind. Dabei ist die Wirkungslinie des Lenkantriebs in der Nullstellung parallel und axial beabstandet zu den Längsachsen der Verbindungsglieder angeordnet. Die abhängigen Ansprüche sind auf vorteilhafte Ausführungsformen der Erfindung gerichtet.

Das erfindungsgemäße Fahrzeug umfasst ein Knicklenkgetriebe, das zwei voneinander beabstandete vertikale Knickachsen aufweist. Vertikal bedeutet in diesem Zusammenhang senkrecht zur Standfläche des Fahrzeugs. Die beiden Knickachsen, um die der Vorder- und der Hinterrahmen für eine Lenkbewegung relativ zueinander verschwenkt werden können, sind in einer Nullstellung des Fahrzeugs vorzugsweise bezüglich einer Längsachse des Fahrzeugs, beispielsweise der Längsmittelachse, einander gegenüberliegend angeordnet. Dabei muss die horizontale Verbindungslinie beider Knickachsen bei einer Draufsicht des Fahrzeugs die betreffende Längachse nicht orthogonal schneiden.

Mit der Nullstellung des Fahrzeugs wird diejenige Stellung definiert, die einen ersten Lenkbereich von einem zweiten Lenkbereich trennt. Das erfindungsgemäße Fahrzeug umfasst hinsichtlich der Lenkung also drei Zustände, nämlich den Zustand im ersten Lenkbereich, die Nullstellung und den Zustand im zweiten Lenkbereich, wobei immer nur ein Zustand vorliegt. Beispielsweise kann das erfindungsgemäße Fahrzeug einen Linkseinschlag (erster Lenkbereich), eine Geradeausfahrt (Nullstellung) und einen Rechtseinschlag (zweiter Lenkbereich) ausführen. Beim Wechsel des Lenkbereichs findet gleichzeitig auch ein automatischer Wechsel von der einen Knickachse zur anderen Knickachse statt. Vorzugsweise beschreibt die Nullstellung diejenige Stellung, bei der die Längsachsen, insbesondere die Symmetrieachsen in Längsrichtung, beider Fahrzeugrahmen aufeinander fluchtend oder zumindest parallel zueinander ausgerichtet sind. Mit anderen Worten ist mit der Nullstellung des Fahrzeugs vorzugsweise die uneingelenkte Einstellung des Fahrzeugs gemeint. In der Nullstellung fährt das Fahrzeug vorzugsweise geradeaus und die Fahrzeugrahmen schwenken um keine der beiden Knickachsen.

Der Erfindung liegt die Erkenntnis zugrunde, anstelle eines einzigen, zentralen Knickgelenks mit einer einzigen Knickachse ein Knicklenkgetriebe mit zwei voneinander beabstandeten Knickachsen zu verwenden. Das Knicklenkgetriebe ist im ersten Lenkbereich zur relativen Verschwenkung des Vorder- und des Hinterrahmens ausgebildet, wobei die relative Schwenkbewegung der Rahmen allein um die erste Knickachse erfolgt. Dementsprechend sorgt das Knicklenkgetriebe im zweiten Lenkbereich für eine relative Verschwenkung des Vorder- und des Hinterrahmens nur um die zweite Knickachse. Als relative Verschwenkung der Rahmen werden drei Fälle der Relativbewegung verstanden, nämlich eine gleichzeitige und gegensinnige Verschwenkung beider Rahmen, also beide Rahmen schwenken um eine gemeinsame Knickachse aufeinander zu oder voneinander weg, oder nur der Vorderrahmen bewegt sich und schwenkt gegenüber dem Hinterrahmen, welcher hinsichtlich der Relativbewegung stehen bleibt, oder der Hinterrahmen bewegt sich und rotiert gegenüber dem stillstehenden Vorderrahmen. In allen Fällen führt die relative Verschwenkung der Rahmen zur Lenkbewegung.

Vorteile des erfindungsgemäßen Fahrzeugs sind die reduzierte Baulänge trotz größerer Lenkwinkel. Dies ist auf die hohe Kompaktheit des erfindungsgemäßen Knicklenkgetriebes in Längsrichtung zurückzuführen. Im Vergleich zu herkömmlichen Fahrzeugen ist bei gleichbleibendem Abstand zwischen dem Vorder- und dem Hinterrahmen ein größerer Lenkwinkel in beiden Lenkbereichen möglich. Ferner wird im Vergleich zu herkömmlichen Fahrzeugen bei gleichbleibendem Lenkwinkel die Baulänge deutlich reduziert, da der Einbauraum für das Knicklenkgetriebe zwischen dem Vorder- und dem Hinterrahmen erheblich verkleinert werden kann. Die bei herkömmlichen Fahrzeugrahmen ausgesparten Eckbereiche sind beim erfindungsgemäßen Fahrzeug nicht mehr notwendig, da die Gefahr des Aneinanderstoßens der Fahrzeugrahmen nicht auftritt, so dass der Konstrukteur die Fahrzeugrahmen weitestgehend unabhängig von den Abmessungen des Knicklenkgetriebes auslegen kann. Es ergeben sich dadurch mehr Freiräume bei der Anordnung der Bauteile in oder an den Fahrzeugrahmen, wie z. B. Motor, Tank, Elektrik, Hydraulik, Fernsteuerung, Wassertank etc. Damit verbunden sind auch mehr Gestaltungsmöglichkeiten im Design.

Das zweite Verbindungsglied ist gegensinnig zum ersten Verbindungsglied am Vorder- und am Hinterrahmen angelenkt. Die beiden Verbindungsglieder sind über jeweils zwei, also insgesamt vier, Drehgelenke am Vorder- und am Hinterrahmen angelenkt. Zum besseren Verständnis der einander "gegensinnigen Anlenkung" der Verbindungsglieder werden in Querrichtung eine "linke" und eine "rechte Seite" (in Fahrtrichtung betrachtet die linke und die rechte Seite von der Längsmittelachse in der Nullstellung) sowie in vertikaler Richtung eine "obere" und eine "untere Ebene" definiert. So lassen sich die vier Drehgelenke in ein "oberes, linkes", ein "oberes, rechtes", ein "unteres, linkes" und ein "unteres , rechtes" Drehgelenk unterteilen. Das "untere, linke" Drehgelenk ist beispielsweise über das erste Verbindungsglied mit dem "unteren, rechten" Drehgelenk in der "unteren Ebene" verbunden, wobei das "untere, linke" Drehgelenk am Hinterrahmen und das "untere, rechte" Drehgelenk am Vorderrahmen angeordnet ist. In der Nullstellung befindet sich das "obere, linke" Drehgelenk lotrecht über dem "unteren, linken" Drehgelenk. Dementsprechend befindet sich das "obere, rechte" Drehgelenk in der Nullstellung lotrecht über dem "oberen, rechten" Drehgelenk. Das zweite Verbindungsglied verbindet in der "oberen Ebene" das "obere, rechte" Drehgelenk mit dem "oberen, linken" Drehgelenk. "Gegensinnige Anlenkung" des zweiten Verbindungsglieds im Vergleich zum ersten Verbindungsglied bedeutet in diesem Zusammenhang, dass das "obere, linke" Drehgelenk am Vorderrahmen und das "obere, rechte" Drehgelenk am Hinterrahmen angeordnet sind. Jedem Rahmen ist genau ein "oberes" und ein "unteres" Drehgelenk, die sich bezüglich der Längsmittelachse des Fahrzeugs in der Nullstellung einander gegenüberliegen, zugeordnet. Mit anderen Worten ist jedem Rahmen genau ein "linkes" und ein "rechtes" Drehgelenk zugeordnet, die sich bezüglich der Längsmittelachse des Fahrzeugs in der Nullstellung einander gegenüberliegen. Die Drehachsen der "linken" Drehgelenke fluchten miteinander und bilden die eine Knickachse. Ebenso fluchten die Drehachsen der "rechten" Drehgelenke miteinander und bilden die andere Knickachse. In der Draufsicht des Fahrzeugs bei der Nullstellung überlappen sich die Längsachsen der Verbindungsglieder, wobei sie die Längsmittelachse des Fahrzeugs senkrecht schneiden. Würde man hypothetisch die Rahmen aus der Nullstellung heraus in einander entgegengesetzte Richtungen auseinander ziehen, so würden die Längsachsen der Verbindungsglieder aufgrund der genannten "gegensinnigen Anlenkung" in der Draufsicht ein "Kreuz" bzw. ein "X" bilden.

Zweckmäßigerweise sind die Knickachsen bezüglich der Längsmittelachse des Fahrzeugs in der Nullstellung symmetrisch einander gegenüberliegend angeordnet, so dass bei einer Draufsicht des Fahrzeugs in der Nullstellung die Verbindungslinie der beiden Knickachsen durch die Längsmittelachse des Fahrzeugs senkrecht und in zwei gleich breite Teile geschnitten wird. Die Längsmittelachse des Fahrzeugs ist dabei diejenige Achse, die in der Nullstellung des Fahrzeugs durch den Schwerpunkt des Fahrzeugs verläuft und senkrecht zu den beiden Fahrzeugachsen, insbesondere Bandagenachsen, angeordnet ist. Durch die symmetrische Ausführung des Fahrzeugs und durch die symmetrische Anordnung der Knickachsen bezüglich der Längsmittelachse wird ein sicherer Betrieb des Fahrzeugs bei Geradeausfahrt sowie ein gleichmäßiges Lenkverhalten in beiden Lenkbereichen erzielt.

Der erste Lenkbereich umfasst zweckmäßig einen ersten Lenkwinkel von 0 < α < 80° und der zweite Lenkbereich einen zweiten Lenkwinkel von 0 < β < 80°. Unabhängig davon, ob der Vorder- und der Hinterrahmen ausgehend von der Nullstellung in einen vorgegebenen Lenkwinkel schwenken oder die relative Schwenkbewegung mit umgekehrtem Drehsinn in Richtung der Nullstellung erfolgt oder der eingeschlagene Lenkwinkel zeitweise festgesetzt wird, soll für den ersten Lenkbereich gelten, dass ein Lenkwinkel von 0 < α < 80° vorliegt. Dementsprechend gilt für den zweiten Lenkbereich ein Lenkwinkel von 0 < β < 80°, wobei α und β jeweils den Winkel angeben, der bei einer Draufsicht eines eingelenkten Fahrzeugs von zwei Geraden eingeschlossen wird, die jeweils parallel zu den Stirnkanten der Fahrzeugrahmen verlaufen und sich in der betreffenden Knickachse, um die die Schwenkbewegung der Fahrzeugrahmen erfolgt ist, schneiden. Beispielsweise kann das Fahrzeug ausgehend von einer Geradeausfahrt in Fahrtrichtung betrachtet nach links fahren, wenn ein Lenkwinkel α, welcher im ersten Lenkbereich liegt, eingestellt wird. Viele Fahrzeuge, insbesondere Baufahrzeuge, können reversieren, d. h. die Fahrtrichtung umkehren, ohne zu wenden. Das bedeutet, dass ein Fahrzeug, welches die Fahrtrichtung umgekehrt, so dass dann der Vorderrahmen in Fahrtrichtung betrachtet dem Hinterrahmen nachfolgt, nun bei einem Lenkeinschlag in den ersten Lenkbereich mit einem Lenkwinkel α eine Bewegung nach rechts ausführt. Der Lenkwinkel ist in beiden Lenkbereichen theoretisch in einem Bereich von 0 bis 80° stufenlos einstellbar. Vorzugweise wird jedoch ein Lenkwinkel in einem Bereich von 0 bis 50° gewählt, um die Kippsicherheit des Fahrzeugs nicht zu gefährden.

Die Knickachsen sind zur Erhöhung der Kompaktheit zweckmäßig im Bereich zwischen dem Vorder- und dem Hinterrahmen, vorzugsweise mittig zwischen den einander zugewandten Stirnkanten der Fahrzeugrahmen, und im Bereich der Seitenkanten des Vorder- oder des Hinterrahmens angeordnet, wobei die erste Knickachse in Fahrtrichtung betrachtet im Bereich der linken Seitenkanten und die zweite Knickachse im Bereich der rechten Seitenkanten des Vorder- oder des Hinterrahmens angeordnet sind. Der Bereich einer Seitenkante soll in diesem Fall durch einen Bereich definiert sein, der ausgehend von dieser Seitenkante in Richtung der Längsmittelachse in der Nullstellung ungefähr 20%, vorzugsweise 10%, der Gesamtbreite des Vorder- oder Hinterrahmens einnimmt. Hierdurch weisen die Knickachsen, die in Längsrichtung betrachtet vorzugsweise mittig zwischen Vorder- und Hinterrahmen angeordnet sind, einen größtmöglichen Abstand zueinander auf, ohne dass die im Wesentlichen durch die Breite der Rahmen vorgegebene Breite des Fahrzeugs unnötig vergrößert wird. Somit kann der Lenkwinkel in beide Lenkrichtungen maximiert werden, ohne dass die Gefahr des Aneinandergeratens beider Fahrzeugrahmen auftritt. Es wäre jedoch auch denkbar, die Knickachsen bei Bedarf außerhalb der durch die Seitenkanten der Rahmen begrenzten Fahrzeugbreite anzuordnen.

Das Knicklenkgetriebe verbindet den Vorder- und den Hinterrahmen in erster Ausführungsform über Kreuz miteinander. Die Verbindung "über Kreuz" ist lediglich eine andere Bezeichnung der bereits beschrieben "gegensinnigen Anlenkung". Dabei weist sowohl der Vorder- als auch der Hinterrahmen jeweils mindestens zwei voneinander beabstandete Anlenkpunkte auf, deren vertikale Drehachsen mit den Knickachsen übereinstimmen und die mittels geeigneter Verbindungsglieder über Kreuz verbunden werden, so dass jeweils ein Anlenkpunkt des Vorderrahmens mit einem bezüglich der Längsmittelachse des Fahrzeugs in der Nullstellung gegenüberliegenden Anlenkpunkt des Hinterrahmens verbunden ist. Gegenüber einem herkömmlichen zentral angelenkten Fahrzeug mit nur einem einzigen Anlenkpunkt bietet das erfindungsgemäße Fahrzeug den Vorteil, dass die auftretenden Kräfte und Momente beim Lenken und Fahren auf mehrere Stellen aufgeteilt werden, so dass anstelle eines einzigen massiven Anlenkpunktes, beispielsweise eines Drehgelenks, mehrere kleinere Drehgelenke verwendet werden können. Ferner werden im Vergleich zu herkömmlichen zentral angelenkten Fahrzeugen auch die Geradeauslaufeigenschaften verbessert, da dank der symmetrischen Anlenkung der Rahmen über die seitlichen Rahmenaußenkanten keine Lenkkorrekturen durchgeführt werden müssen.

Das Knicklenkgetriebe umfasst dabei zweckmäßig ein erstes und ein zweites Drehgelenkpaar, die jeweils eine Knickachse bilden. Jedes Drehgelenkpaar weist ein oberes und ein unteres Drehgelenk auf, die vertikal zueinander angeordnet sind, so dass deren Drehachsen vertikal fluchten. In der Nullstellung liegen die Drehgelenke beider Drehgelenkpaare jeweils vertikal zueinander. Die Drehgelenke können auf herkömmliche Weise mittels Zapfen und Buchsen, vorzugsweise mit dazwischen angeordneten Wälzlagern, ausgeführt sein. Eines der oberen Drehgelenke ist am Vorderrahmen angeordnet. Genauso ist eines der unteren Drehgelenke am Vorderrahmen angeordnet, wobei dieses untere Drehgelenk dem oberen Drehgelenk des Vorderrahmens bezüglich der Längsmittelachse gegenüberliegend angeordnet ist. Das andere obere Drehgelenk und das andere untere Drehgelenk sind dementsprechend am Hinterrahmen angeordnet, so dass jedes Drehgelenkpaar ein mit dem Vorderrahmen verbundenes und ein mit dem Hinterrahmen verbundenes Drehgelenk aufweist. Bei einer Querschnittsansicht des Knicklenkgetriebes in der Nullstellung würde die gedachte Verbindungslinie der mit dem Vorderrahmen verbundenen Drehgelenke die gedachte Verbindungslinie der mit dem Hinterrahmen verbundenen Drehgelenke kreuzen.

Das erste Verbindungsglied ist vorzugweise eine Lenkplatte. Das zweite Verbindungsglied ist vorzugsweise eine im Vergleich zur Lenkplatte schlank ausgeführter Verbindungsarm. Dabei werden die oberen Drehgelenke vorzugsweise über den Verbindungsarm in einer ersten horizontalen Ebene verbunden. Die unteren Drehgelenke werden vorzugsweise über die Lenkplatte in einer zweiten horizontalen Ebene, die vorzugsweise unterhalb der ersten horizontalen Ebene angeordnet ist, miteinander verbunden. Horizontal bedeutet hier parallel zur Standfläche des Fahrzeugs. Durch die Anordnung über zwei Ebenen lässt sich das erfindungsgemäße Knicklenkgetriebe extrem kompakt und stabil ausführen, wobei der Abstand zwischen Vorder- und Hinterrahmen auf ein Minimum verkürzt wird. Die Längsachsen des Verbindungsarms und der Lenkplatte sind in der Nullstellung übereinander und quer zur Längsmittelachse des Fahrzeugs angeordnet. Vorzugsweise sind sie in der Nullstellung senkrecht zur Längsmittelachse des Fahrzeugs und im Wesentlichen mittig im Freiraum zwischen dem Vorder- und dem Hinterrahmen angeordnet, um die Kompaktheit des Knicklenkgetriebes noch weiter zu erhöhen. Der Verbindungsarm mit den oberen Drehgelenken und die Lenkplatte mit den unteren Drehgelenken bilden gemeinsam auf einfache und robuste Weise eine gelenkige Über-Kreuz-Verbindung zwischen dem Vorder- und dem Hinterrahmen über zwei Ebenen. Der Verbindungsarm dient hauptsächlich der Führung der Relativbewegung zwischen Vorder- und Hinterrahmen. Die Lenkplatte erfüllt neben der Funktion der Zwangsführung der Bewegung vor allem die Funktion der Übermittlung der zur Lenkung erforderlichen Kräfte und Momente.

Die beschriebene Über-Kreuz-Verbindung mit dem Verbindungsarm und der Lenkplatte legt die Kinematik des erfindungsgemäßen Knicklenkgetriebes fest. Im ersten Lenkbereich mit dem Lenkwinkel α wirken die vertikal fluchtenden Drehachsen des ersten Drehgelenkpaares als die erste Knickachse. Der Lenkwinkel α wird dabei von den Längsachsen des Verbindungsarms, welcher im ersten Lenkbereich parallel zur Stirnkante des Hinterrahmens verläuft, und der Lenkplatte, welche im ersten Lenkbereich parallel zur Stirnkante des Vorderrahmens verläuft, eingeschlossen, wobei der Verbindungsarm mit Hilfe des oberen Drehgelenks des ersten Drehgelenkpaares und die Lenkplatte mit Hilfe des unteren Drehgelenks des ersten Drehgelenkpaares auf der ersten Knickachse, allerdings in zwei unterschiedlichen Ebenen, angelenkt sind. Das zweite Drehgelenkpaar, welches dem die erste Knickachse bildenden ersten Drehgelenkpaar gegenüberliegt, wird dabei "aufgelöst", so dass die Drehachsen der Drehgelenke des zweiten Drehgelenkpaares nicht vertikal fluchten, sondern räumlich getrennt sind. Bei einer Draufsicht des Knicklenkgetriebes, welches im ersten Lenkbereich mit α eingelenkt ist, bildet die gemeinsame Drehachse des ersten Drehgelenkpaares, nämlich die erste Knickachse, zusammen mit den Symmetrieachsen der Drehgelenke des zweiten, "aufgelösten" Drehgelenkpaares ein gleichschenkliges Dreieck, wobei die Schenkel, die über die jeweiligen Abstände der oberen Drehgelenke und der unteren Drehgelenke zueinander definiert sind, einen Winkel von α einschließen.

Die beschriebene Über-Kreuz-Verbindung mit vier Drehgelenken und zwei Verbindungsgliedern in zwei Ebenen ermöglicht eine kompakte, robuste und wartungsfreundliche Ausführung des Knicklenkgetriebes. Selbstverständlich ist neben dem ausführlich beschriebenen, bevorzugten Ausführungsbeispiel auch eine alternative Umsetzung des Knicklenkgetriebes möglich, bei dem beispielsweise über mechanische oder elektromagnetische Schließmechanismen wechselweise nur das eine Drehgelenkpaar im Eingriff ist, d. h. die Knickachse bildet, und das gegenüberliegende Drehgelenkpaar zur Verschwenkung freigegeben wird.

Der Verbindungsarm und die Lenkplatte sind als starre Glieder zwischen den jeweiligen Drehgelenken zu verstehen. Optional kann bei der Materialauswahl und der Konstruktion der Gelenkverbindungsglieder eine gewisse Elastizität berücksichtigt werden, um somit auftretenden Pendelbewegungen infolge von Bodenunebenheiten und damit verbundenen Belastungen der Drehgelenke entgegenzuwirken. Alternativ kann das Fahrzeug ein zusätzliches Pendelgelenk aufweisen.

Das erfindungsgemäße Knicklenkgetriebe weist in vorteilhafter Ausgestaltung der Erfindung ein erstes und ein zweites Anschlagelement auf, wobei im ersten Lenkbereich das erste Anschlagelement zwischen dem Vorderrahmen und der Lenkplatte und im zweiten Lenkbereich das zweite Anschlagelement zwischen dem Hinterrahmen und der Lenkplatte anliegt. Die beispielsweise im Wesentlichen quaderförmigen Anschlagelemente erfüllen gleich mehrere Funktionen, die zum Teil je nach Lenkbereich variieren. In der Nullstellung des Fahrzeugs sorgen sie zusammen mit der Breite der Lenkplatte für einen definierten Abstand zwischen dem Vorder- und dem Hinterrahmen und verhindern somit ein "Zusammendrücken" des Knicklenkgetriebes. Im ersten Lenkbereich ist das erste Anschlagelement zwischen der Lenkplatte und der hinteren Stirnkante des Vorderrahmens eingeklemmt. Damit wirkt es als Anschlag und Abstandshalter. Es überträgt zumindest teilweise Kräfte und Momente von der Lenkplatte zum Vorderrahmen und umgekehrt, so dass die Drehgelenke entlastet werden. Im ersten Lenkbereich ist das zweite Anschlagelement, welches entweder am Hinterrahmen oder an der dem ersten Anschlagelement entgegengesetzten Seite der Lenkplatte angeordnet ist, frei von Funktion. Im zweiten Lenkbereich jedoch steht das zweite Anschlagelement in Kontakt mit der Lenkplatte auf der einen Seite und der vorderen Stirnkante des Hinterrahmens auf der anderen Seite und wirkt als Anschlag, Abstandshalter und Übertragungselement für Kräfte und Momente zwischen der Lenkplatte und dem Hinterrahmen. Die Anschlagelemente spielen somit eine wichtige Rolle sowohl beim Geradeauslauf als auch bei der Lenkung.

Die Anschlagelemente sind zweckmäßigerweise lenkplattenseitig angeordnet bzw. mit der Lenkplatte verbunden. Sie können entweder integral mit der Lenkplatte ausgeführt sein oder mittels geeigneter Verbindungstechniken kraft-, form- oder stoffschlüssig mit der Lenkplatte verbunden sein.

Es erweist sich als vorteilhaft, dass das Knicklenkgetriebe einen mit dem Vorderrahmen verbundenen ersten Lenkhebel und einen mit dem Hinterrahmen verbundenen zweiten Lenkhebel umfasst, welche in der Nullstellung bezüglich der Längsmittelachse des Fahrzeugs einander gegenüberliegend angeordnet sind. Vorzugsweise sind die beiden unteren Drehgelenke der zweiten Ebene jeweils an einem dieser Lenkhebel angeordnet, so dass die Lenkplatte eine gelenkige Verbindung zwischen den beiden Lenkhebeln und somit zwischen dem Vorder- und dem Hinterrahmen herstellt. Mit einem definierten Abstand zur Längsachse der Lenkplatte ist der Lenkantrieb mit seinen Enden über weitere Anlenkpunkte, vorzugsweise Drehgelenke, an den Lenkhebein angelenkt. Der definierte Abstand entspricht der Länge eines Hebelarms auf dem jeweiligen Lenkhebel, wodurch aus einer am Anlenkpunkt des Lenkantriebs angreifender Kraft ein Moment um den Bezugspunkt, nämlich das untere Drehgelenk, erzeugt wird. In der Nullstellung des Fahrzeugs ist die Längsachse des Lenkantriebs mit diesem Abstand parallel zur Längsachse der Lenkplatte und vorzugsweise in der gleichen horizontalen Ebene angeordnet. Durch diese Anordnung des Lenkantriebs kann eine herkömmliche, doppeltwirkende Kolben-Zylinder-Einheit als Lenkantrieb verwendet werden. Vorzugsweise wird die Kolben-Zylinder-Einheit hydraulisch betätigt, da insbesondere bei Baufahrzeugen und Baumaschinen ohnehin ein hydrostatischer Antrieb für die Fahrt und für die Arbeitsmittel vorhanden ist, dem das Druckmittel für die Lenkbetätigung entnommen werden kann.

Das Knicklenkgetriebe weist bevorzugt ein horizontal liegendes Lenkviereck auf, dessen Eckpunkte durch die an den Lenkhebeln angeordneten Drehgelenke und dessen Seiten durch die Lenkplatte, den Lenkantrieb und die beiden einander gegenüberliegenden Lenkhebel gebildet werden. Dabei ist zumindest eine Seitenlänge des Lenkvierecks über eine Längenänderung des Lenkantriebs variabel einstellbar. In der Nullstellung beschreibt das Lenkviereck vorzugsweise ein Trapez, insbesondere ein gleichschenkliges Trapez mit zwei zueinander parallelen Seiten, nämlich die Längsachsen der Lenkplatte und des Lenkantriebs, und zwei einander gegenüberliegenden, gleichlangen Seiten, nämlich die Hebelarme der Lenkhebel. Mit Hilfe der erfindungsgemäßen Anordnung der Lenkhebel, Lenkplatte und des Lenkantriebs in Form eines Lenkvierecks kann auf sehr kompakte und einfache Weise die Lenkbewegung eingeleitet werden. Ausgehend von der Nullstellung wirken Betätigungskräfte an den beiden Anlenkpunkten des Lenkantriebs auf die Lenkhebel, wenn Druckmittel auf eine der beiden Seiten des Kolbens eingeleitet werden. Dabei verändert sich die Länge des Lenkantriebs, beispielsweise durch Herausfahren oder Einziehen der Kolbenstange des Hydraulikzylinders, woraus letztendlich eine Verschwenkung des Vorderrahmens relativ zum Hinterrahmen um eine der beiden Knickachsen resultiert. Die Längenänderung des Lenkantriebs, neben dem Betätigungsdruck, kann als eine Größe zur Einstellung eines gewünschten Lenkwinkels im gewünschten Lenkbereich herangezogen werden, da mit Hilfe des Längenunterschieds des Lenkantriebs sowie der drei anderen bekannten Seitenlängen des Lenkvierecks, die vorzugsweise konstant sind, mathematisch der Lenkwinkel berechnet werden kann. Das Lenkviereck ändert seine Gestalt je nach der vorliegenden Seitenlänge, die durch den Lenkantrieb variabel eingestellt wird, wobei aufgrund der Lenkkinematik je nach Lenkbereich im Wesentlichen jeweils nur ein Eckpunkt des Lenkvierecks seine Position gegenüber der Position in der Nullstellung ändert. Durch Verwendung eines Teleskopzylinders kann die Möglichkeit der Längenvariation erweitert werden.

Der Verbindungsarm, die Lenkplatte mit den Anschlagelementen sowie der Lenkantrieb sind bei einem Geradeauslauf quer zur Längmittelachse des Fahrzeugs, insbesondere senkrecht dazu, angeordnet. Dabei wirken sie als drei starre Verbindungsglieder, die die Lage des Vorderrahmens relativ zum Hinterrahmen fixieren, so dass der Abstand zwischen ihnen nicht vergrößert oder verkleinert wird. Wird der Lenkantrieb betätigt und somit das Fahrzeug ausgehend von der Nullstellung in einen der beiden Lenkbereiche gelenkt, so führen der Vorder- und der Hinterrahmen aufgrund der durch das Knicklenkgetriebe vorgegebenen Lenkkinematik entweder eine Schwenkbewegung um die erste Knickachse oder um die zweite Knickachse aus. Die zur Lenkung erforderlichen Betätigungskräfte bzw. Lenkmomente werden hauptsächlich in der zweiten Ebene über die Lenkhebel auf den Vorder- und den Hinterrahmen übertragen. Der Verbindungsarm in der ersten Ebene kann im Vergleich zur Lenkplatte leichter und einfacher ausgeführt sein, da er hauptsächlich zur Führung der Schwenkbewegung dient. Bei einer Betätigung des Lenkantriebs lässt das erfindungsgemäße Knicklenkgetriebe also nur zwei zwangsgeführte Schwenkbewegungen zu, nämlich die relative Verschwenkung der Rahmen entweder um die erste oder um die zweite Knickachse. Darüber hinaus sind keine weiteren Relativbewegungen zwischen dem Vorder- und dem Hinterrahmen möglich.

Das erfindungsgemäße Knicklenkgetriebe ist ein ebenes Führungsgetriebe. Bei einem ebenen Getriebe sind alle Drehachsen parallel und die Bewegungsbahnen von Gliedpunkten liegen in parallelen Ebenen. Führungsgetriebe sind Getriebe, bei denen ein Glied so geführt wird, dass es bestimmte Lagen einnimmt bzw. dass Punkte des Gliedes bestimmte Bahnen beschreiben. Diese Bedingungen werden vom erfindungsgemäßen Knicklenkgetriebe erfüllt.

Die Lenkplatte weist gemäß einer vorteilhaften Ausführungsform mindestens eine Durchgangsbohrung auf. Diese Durchgangsbohrung kann zum Hindurchführen von Leitungen, beispielsweise Hydraulikleitungen, oder Kabeln, beispielsweise Strom- oder Signalkabeln, dienen. Ebenso kann die Durchgangsbohrung an den beiden Öffnungen mit Anschlussmöglichkeiten versehen sein, so dass sie selbst als ein Teil einer Leitung dient. Beispielsweise können Schmiermittel zur Schmierung der Drehgelenke durch die Lenkplatte durchgeleitet werden.

Das erfindungsgemäße Fahrzeug ist vorzugsweise ein Baufahrzeug oder eine Baumaschine, insbesondere eine Vibrationswalze zur Bodenverdichtung, besonders bevorzugt eine Grabenwalze. Grabenwalzen müssen extrem wendig sein. Ferner sollten sie eine möglichst kurze Baulänge haben, um den häufigen Transport vom und zum Einsatzort zu erleichtern. Das erfindungsgemäße Fahrzeug eignet sich hervorragend als eine solche Vibrationswalze. Darüber hinaus wären auch andere Einsatzgebiete bei knickgelenkten Baufahrzeugen und Baumaschinen vorstellbar, wenn es auf eine gute Manövrierbarkeit bei gleichzeitig kompakter Bauweise ankommt.

Vorzugsweise ist der Lenkantrieb ein doppeltwirkender Hydraulikzylinder mit einer Kolbenstange. Es wäre auch denkbar, einen Linearmotor als Lenkantrieb vorzusehen. Wichtig ist, dass dank der erfindungsgemäßen Kinematik des Knicklenkgetriebes nur ein einziger doppeltwirkender Hydraulikzylinder oder Linearmotor ausreichend ist, um die Lenkbewegung sowohl um die erste als auch um die zweite Knickachse herbeizuführen.

Anhand von Zeichnungen wird ein bevorzugtes Ausführungsbeispiel der Erfindung näher beschrieben. Es zeigen schematisch:
- Fig. 1: eine Draufsicht auf ein Ausführungsbeispiel der Erfindung;
- Fig. 2: eine Draufsicht wie Fig. 1, allerdings mit Längsschnitt des Knicklenkgetriebes und des Lenkantriebs durch die Ebene E2 (Fig. 3);
- Fig. 3: eine Querschnittsansicht des Fahrzeugs entlang der Linie X-X aus Fig. 1;
- Fig. 4: eine Draufsicht des Fahrzeugs aus Fig. 1, allerdings im ersten Lenkbereich;
- Fig. 5: eine Untersicht des Knicklenkgetriebes aus Fig. 4 mit Längsschnitt durch Ebene E2 im ersten Lenkbereich;
- Fig. 6: eine Prinzipskizze der Lenkbewegung im ersten Lenkbereich, wie Fig. 5;
- Fig. 7: eine Draufsicht des Fahrzeugs aus Fig. 1, allerdings im zweiten Lenkbereich;
- Fig. 8: eine Untersicht des Knicklenkgetriebes aus Fig. 7 mit Längsschnitt durch Ebene E2 im zweiten Lenkbereich;
- Fig. 9: eine Prinzipskizze der Lenkbewegung im zweiten Lenkbereich, wie Fig. 8.

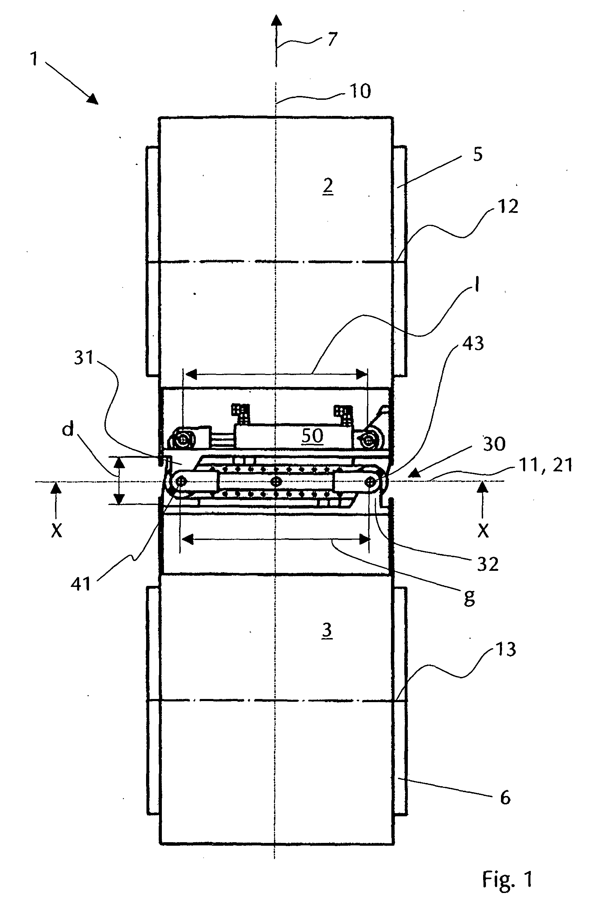

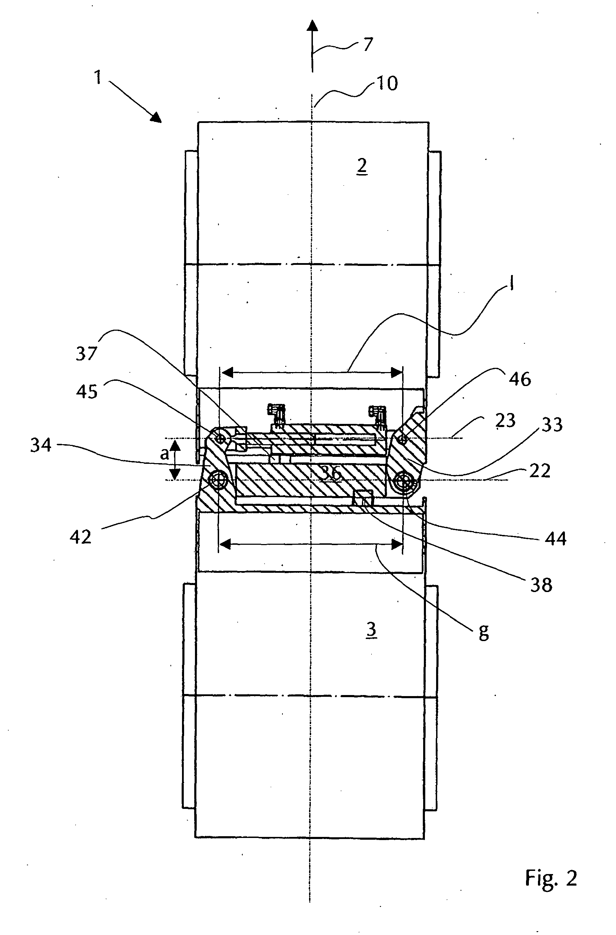

Die Figuren 1 und 2 zeigen die Draufsicht auf ein Ausführungsbeispiel des erfindungsgemäßen Fahrzeugs 1 in der Nullstellung. Bei dem dargestellten Fahrzeug 1 handelt es sich um eine Bodenverdichtungswalze, insbesondere eine Grabenwalze, mit Vibrations- und Fahrtantrieb, mit einem Vorderrahmen 2 und einem Hinterrahmen 3. Der Vorderrahmen 2 weist eine Vorderbandage 5 mit einer Vorderachse 12 auf. Dementsprechend umfasst der Hinterahmen 3 eine Hinterbandage 6 mit einer Hinterachse 13. Die dargestellte Vibrationswalze 1 ist im Wesentlichen symmetrisch zur Längsmittelachse 10 und zur Querachse 11 aufgebaut. Das Knicklenkgetriebe 30 verbindet den Vorder- 2 und den Hinterrahmen 3 in zwei horizontalen Ebenen E1, E2 gelenkig und über Kreuz miteinander.

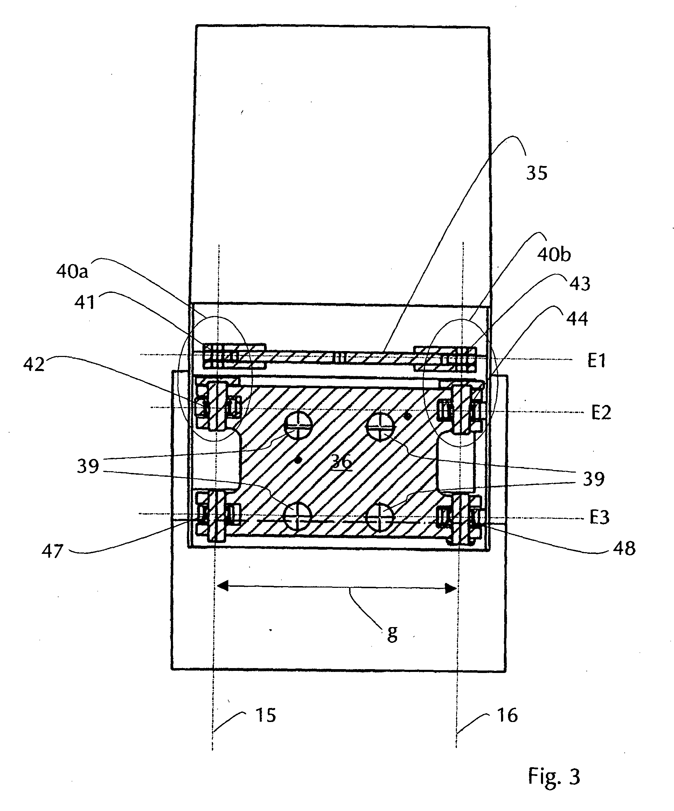

In Figur 1 ist die erste horizontale Ebene E1 des Knicklenkgetriebes 30 mit den oberen Drehgelenken 41, 43 gut erkennbar. Die beiden oberen Drehgelenke 41, 43 liegen mit einem Abstand g voneinander beabstandet und bezüglich der Längsmittelachse 10 der Walze 1 symmetrisch einander gegenüber, so dass der Abstand g durch die Längsmittelachse 10 halbiert wird. Das erste Drehgelenkpaar 40a mit dem oberen Drehgelenk 41 und dem unteren Drehgelenk 42 bildet die erste Knickachse 15 (Fig. 3). Ebenso bildet das zweite Drehgelenkpaar 40b mit dem oberen Drehgelenk 43 und dem unteren Drehgelenk 44 auf der gegenüberliegenden Walzenseite die zweite Knickachse 16 (Fig. 3).

Das Knicklenkgetriebe 30 ist im Wesentlichen in einem Zwischenbereich zwischen dem Vorder- 2 und dem Hinterrahmen 3 angeordnet, wobei die hintere Stirnkante 2a des Vorderrahmens 2 einen Abstand d zur vorderen Stirnkante 3a des Hinterrahmens 3 aufweist. Bei herkömmlichen knickgelenkten Fahrzeugen ist der Abstand d zwischen dem Vorder- 2 und dem Hinterahmen 3 um ein Vielfaches größer als beim erfindungsgemäßen Fahrzeug 1. Bei der Auslegung des Freiraums mit Abstand d zwischen den Rahmen 2, 3 spielen bei herkömmlichen knickgelenkten Fahrzeugen der gewünschte maximale Lenkeinschlag und die angestrebte Fahrzeugbreite eine große Rolle. Soll eine der beiden Größen erhöht werden, so resultiert daraus, dass auch der Abstand d vergrößert werden muss. Beim erfindungsgemäßen Fahrzeug 1 allerdings kann die Konstruktion des Knicklenkgetriebes 30 weitestgehend unabhängig von den Fahrzeugrahmen 2, 3 und frei von solchen Einschränkungen erfolgen. Der Abstand d zwischen den Rahmen 2, 3 bleibt stets auf einem minimalen Wert. Der Verbindungsarm 35 verbindet die oberen Drehgelenke 41, 43 in der ersten Ebene E1 miteinander, wobei das obere Drehgelenk 41 des ersten Drehgelenkpaares 40a an einem mit dem Vorderrahmen 2 fest verbundenen Halteteil 31 und das obere Drehgelenk 43 des zweiten Drehgelenkpaares 40b an einem mit dem Hinterrahmen 3 fest verbundenen Halteteil 32 angeordnet sind. Die Längsachse 21 des Verbindungsarms 35 ist in der Nullstellung parallel zur Querachse 11 der Walze 1 angeordnet.

Figur 2 zeigt die gleiche Draufsicht wie Fig. 1 allerdings mit einem durch die zweite Ebene E2 geschnittenen Knicklenkgetriebe 30 und Lenkantrieb 50. Das untere Drehgelenk 42 des ersten Drehgelenkpaares 40a ist über die Lenkplatte 36 mit dem unteren Drehgelenk 44 des zweiten Drehgelenkpaares 40b verbunden, wobei die Längsachse 22 der Lenkplatte 36 vertikal unterhalb der Längsachse 21 des Verbindungsarms 35 angeordnet ist und die Längsmittelachse 10 des Fahrzeugs 1 senkrecht schneidet. Der Abstand d zwischen dem Vorder- 2 und dem Hinterrahmen 3 ergibt sich aus der Breite der beiden Anschlagelemente 37, 38, die mit der Lenkplatte 36 verbunden sind, und der Breite der Lenkplatte 36, so dass in der Nullstellung das erste Anschlagelemente 37 am Vorderrahmen 2 und das zweite Anschlagelement am Hinterrahmen 3 anliegen. Der erste Lenkhebel 33, der das untere Drehgelenk 44 des zweiten Drehgelenkpaares 40b und das zweite Drehgelenk 46 des Lenkantriebs 50 trägt, ist fest mit dem Vorderrahmen 2 verbunden. Ihm gegenüberliegend ist der zweite Lenkhebel 34, der das untere Drehgelenk 42 des ersten Drehgelenkpaares 40a und das erste Drehgelenk 45 des Lenkantriebs 50 trägt, fest mit dem Hinterrahmen 3 verbunden. Die Drehgelenke 45, 46, die über den Lenkantrieb 50 miteinander verbunden sind, weisen einen Abstand I auf, welcher geringfügig kleiner als der Abstand g ist. Die Längsachse 23 des Lenkantriebs 50 ist in der Ebene E2 parallel zur Längsachse 22 der Lenkplatte 36 mit einem Abstand a angeordnet, wobei dieser Abstand a im Lenkbetrieb einem Hebelarm entspricht. Damit beschreiben die Drehgelenke 42, 44, 46, 45 ein Lenkviereck in der zweiten Ebene E2, insbesondere ein gleichschenkliges Trapez mit zwei einander gegenüberliegenden parallelen Seiten der Länge g, I sowie zwei einander gegenüberliegenden, gleich langen Seiten der Länge a.

In der in Figuren 1 und 2 dargestellten Nullstellung fährt die Walze 1 geradeaus in die durch den Pfeil 7 angezeigte Richtung. Die Walze 1 ist mit einer Reversiervorrichtung (nicht dargestellt) versehen, so dass sie auch in die entgegengesetzte Richtung fahren kann. Zwecks eindeutiger Kennzeichnung werden unabhängig von der Orientierung bzw. Fahrtrichtung die Bezeichnungen Vorderrahmen 2 und Hinterrahmen 3 beibehalten. Beim Geradeauslauf verbinden die Lenkplatte 36, der Verbindungsarm 35 und der Lenkantrieb 50 den Vorder- 2 und den Hinterrahmen 3 starr miteinander, so dass keinerlei Relativbewegung zwischen dem Vorder- 2 und dem Hinterrahmen 3 auftreten kann. Der Abstand d zwischen den Rahmen 2, 3 bleibt konstant, solange die Nullstellung vorliegt.

Figur 3 zeigt einen Querschnitt des erfindungsgemäßen Fahrzeugs 1 entlang der Linie X-X aus Fig. 1. Das erste Drehgelenkpaar 40a mit den Drehgelenken 41, 42 bilden die erste Knickachse 15. Die zweite Knickachse 16 wird durch das zweite Drehgelenkpaar 40b mit den Drehgelenken 43, 44 gebildet. Je nach Anwendungsfall können an der Lenkplatte 36 optional in einer dritten horizontalen Ebene E3 zusätzliche Drehgelenke 47, 48 angeordnet werden, die jeweils zur Bildung der ersten 15 oder der zweiten Knickachse 16 beitragen. Dies kann beispielsweise erforderlich sein, wenn die Lenkplatte 36 aufgrund einer größeren Dimensionierung des Fahrzeugs 1 größeren Betätigungskräften und Lenkmomenten standhalten soll. Der Verbindungsarm 35 ist im gezeigten Beispiel als eine einfache Pleuelstange ausgeführt.

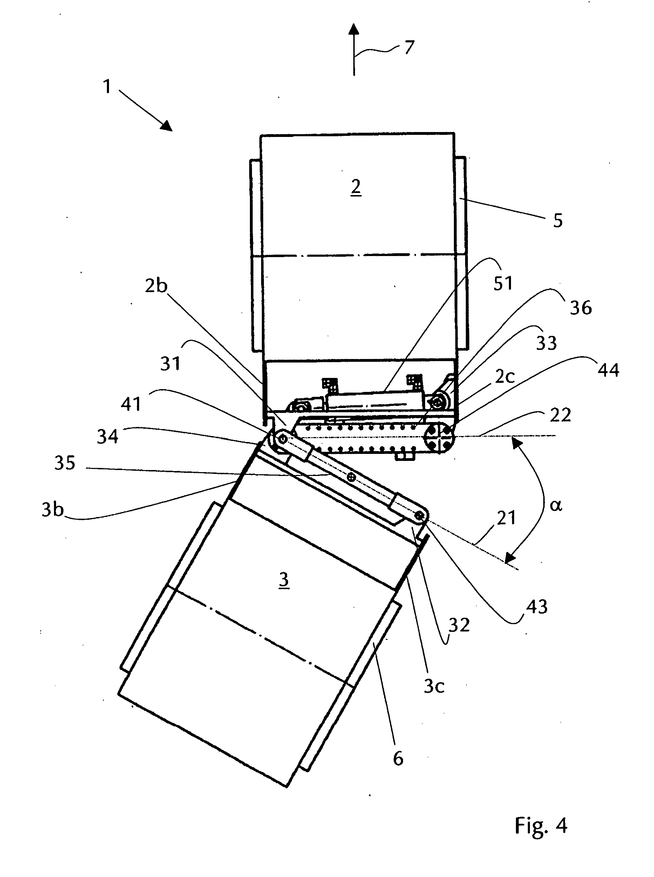

Figur 4 zeigt die Draufsicht der Walze 1 im ersten Lenkbereich. Der erste Lenkbereich umfasst einen Lenkwinkel von 0 < α < 80°, wobei dieser Lenkwinkel α von den sich in der ersten Knickachse 15 schneidenden Längsachsen 21, 22 eingeschlossen wird. Fährt die Walze 1 in die Pfeilrichtung 7, so führt der Lenkwinkel α um die erste Knickachse zu einer Richtungsänderung der Walze 1 nach links (in Fahrtrichtung betrachtet). Bei Betrachtung der reinen Relativbewegung der Rahmen 2, 3 zueinander durch einen sich mit der ersten Knickachse 15 bewegenden Beobachter schwenken in Fahrtrichtung 7 betrachtet die linken Seitenkanten 2b, 3b der Rahmen 2, 3 relativ zueinander. Bei diesem Ausführungsbeispiel schwenkt im ersten Lenkbereich der Hinterrahmen 3 gegenüber dem stillstehenden Vorderrahmen 2, wenn man den Lenkeinsschlag im Stillstand des Fahrzeugs 1 ausführen würde. Die in Fahrtrichtrichtung betrachtet rechten Seitenkanten 2c, 3c der Rahmen 2, 3 klaffen auseinander, so dass sich auch das obere 43 und das untere Drehgelenk 44 des zweiten Drehgelenkpaares 40b, deren Drehachsen vorher in der Nullstellung fluchteten, nun voneinander entfernen. Die Drehachsen der Drehgelenke 41, 43, 44 bilden nun ein gleichschenkliges Dreieck mit den Schenkellängen g und dem Spitzenwinkel α. Im gezeigten Beispiel laufen die Vorderbandage 5 und die Hinterbandage 6 dank der symmetrischen Auslegung der Walze 1 bezüglich der Querachse 11 in einer Spur.

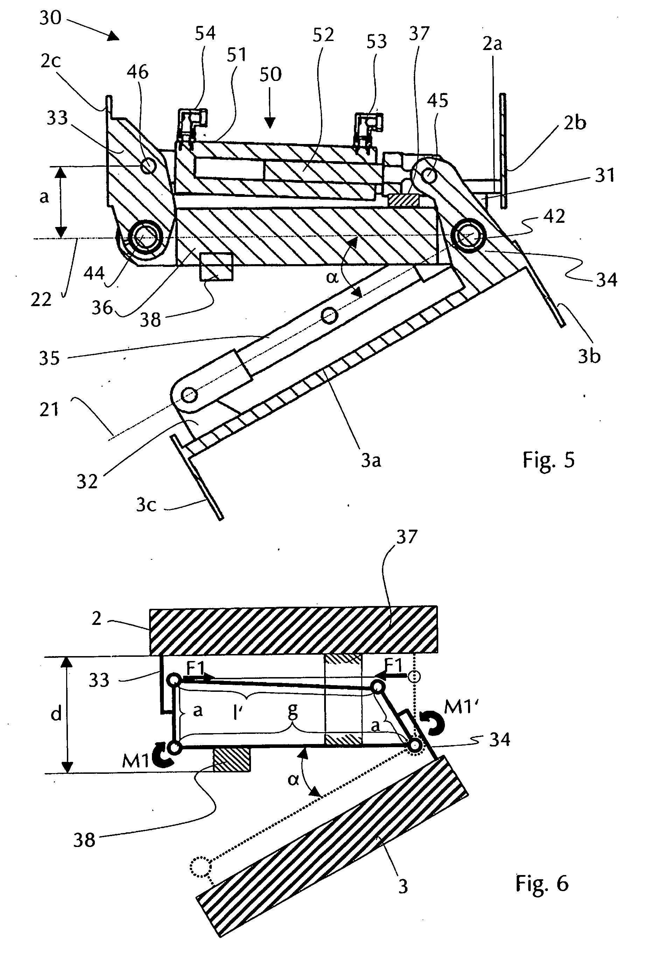

Figur 5 zeigt die Untersicht des Knicklenkgetriebes 30 im ersten Lenkbereich wie Fig. 4, allerdings mit einem Längsschnitt durch die zweite Ebene E2, um den Lenkzustand näher zu beschreiben. Auslöser für die Lenkbewegung in den ersten Lenkbereich ist die Betätigung des Lenkantriebs 50. Der in diesem Ausführungsbeispiel als doppeltwirkender Hydraulikzylinder 51 mit einer Kolbenstange 52 und zwei Hydraulikanschlüssen 53, 54 ausgeführter Lenkantrieb 50 wird betätigt, wobei der erste Hydraulikanschluss 53 als Zulauf für das unter Druck stehende Hydrauliköl und der zweite Hydraulikanschluss 54 als Rücklauf für das im Zylinder 51 befindliche Hydrauliköl dient, so dass die Kolbenstange 52 in den Zylinder 51 hineingleiten könnte. Das Lenkviereck 42, 44, 46, 45 ändert seine Gestalt infolge der Betätigung des Lenkantriebs 50, da der Abstand der Drehgelenke 45, 46 von ursprünglich I in der Nullstellung nun auf I' verkürzt wird (vgl. Fig. 6).

Figur 6 zeigt in stark vereinfachter Form das Lenkprinzip im ersten Lenkbereich, wie Fig. 5. Zur besseren Übersicht wird in Fig. 6 im Vergleich zu Fig. 5 der Abstand d/2 zwischen dem Vorderrahmen 2 und der Längsachse 22 der Lenkplatte 36 vergrößert, um überlappende Darstellungen möglichst zu vermeiden. Es sei der Vollständigkeit halber bemerkt, dass im dargestellten Ausführungsbeispiel der Lenkantrieb 50 zumindest teilweise in den Vorderrahmen 2 hineinragt, d. h. außerhalb des durch den Abstand d definierten Zwischenbereichs zwischen dem Vorder- 2 und dem Hinterrahmen 3 angeordnet ist. Figur 6 zeigt das Knicklenkgetriebe 30 aus Fig. 5, wobei zur Vereinfachung die maßgebenden Drehgelenke als Kreise und die Längsachsen der starren Getriebeglieder als Linien dargestellt sind. Zusätzlich sind die wirkenden Betätigungskräfte F1 sowie Lenkmomente M1, M1' eingezeichnet. Ebenso sind die wichtigsten Abmessungen des Lenkvierecks 42, 44, 46, 45 und Abstände I', a, g, d eingetragen. Ferner sind die Anschlagelemente 37, 38 sowie die Rahmen 2, 3 erkennbar.

Ausgehend von der Nullstellung wird die Lenkbewegung in den ersten Lenkbereich folgendermaßen eingeleitet. Durch die hydraulische Betätigung des Lenkantriebs 50 wirken Betätigungskräfte F1 auf die beiden Anlenkpunkte des Lenkantriebs 50, nämlich die Drehgelenke 45, 46. Durch den Hebelarm mit der Länge a auf dem ersten Lenkhebel 33 resultiert ein erstes Lenkmoment M1, wobei das Drehgelenk 46 sowie der erste Lenkhebel 33 zusammen mit dem Vorderrahmen 2 im Wesentlichen gefesselt sind und weder rotatorisch um das Drehgelenk 44 noch translatorisch bewegt werden können. Der erste Lenkhebel 33, der Vorderrahmen 2, sowie das erste Anschlagelement 37 zusammen mit der Lenkplatte 36 nehmen die erste, das Moment M1 verursachende Kraft F1 auf, wobei die genannten Maschinenteile im Wesentlichen keine Bewegung ausführen. Auf der gegenüberliegenden Seite wirkt infolge der Kraft F1 mit dem Hebelarm der Länge a ein zweites Lenkmoment M1' um das Drehgelenk 42 auf den zweiten Lenkhebel 34, wodurch der mit dem zweiten Lenkhebel 34 fest verbundene Hinterrahmen 3 um das Drehgelenk 42 um den Winkel α frei schwenkt. Die Schwenkbewegung des Hinterrahmens 3 relativ zum Vorderrahmen 2 wird über den Verbindungsarm 35 und das obere Drehgelenk 41, welche sich in der ersten Ebene E1 befinden, zusätzlich zwangsgeführt. Die Drehgelenke 41, 42 des ersten Drehgelenkpaares 40a bilden die erste Knickachse 15 für den ersten Lenkbereich. Unabhängig von der Drehrichtung des Hinterrahmens 3 relativ zum Vorderrahmen 2 findet jede relative Drehbewegung der Rahmen 2, 3 im ersten Lenkbereich immer nur um die erste Knickachse 15 statt. Die Betätigung des Lenkantriebs 50 führt in Abhängigkeit vom eingestellten Druck zu einer Verschiebung des Drehgelenks 45, insbesondere einer Rotation um das Drehgelenk 42, so dass die variable Seitenlänge des Lenkvierecks von I (Nullstellung) auf I' reduziert wird. Solange die Bedingung gilt, dass I' < I ist, liegt der Zustand im ersten Lenkbereich vor. Soll α in Richtung Nullstellung wieder verkleinert werden, so muss das Druckmittel mit Hilfe des zweiten Hydraulikanschlusses auf die entgegengesetzte Seite des Kolbens wirken. Wird die Nullstellung erreicht, so gilt α = 0 und I' = I.

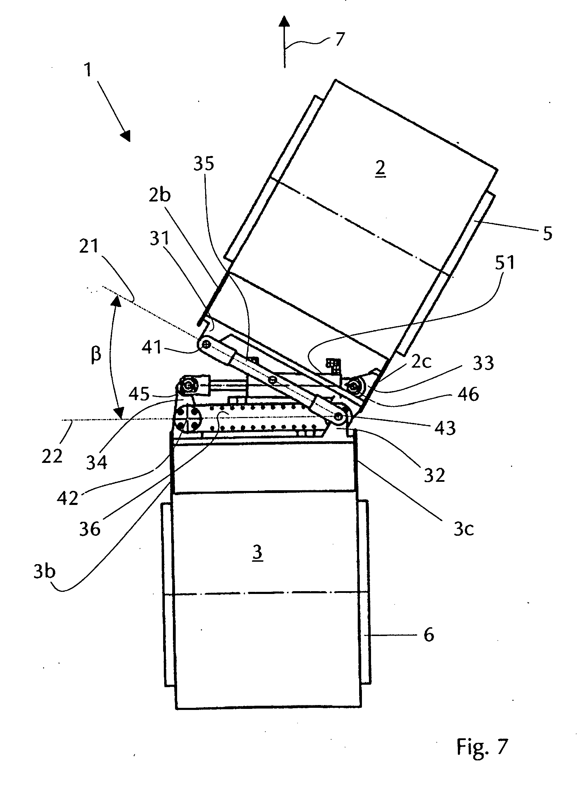

Figur 7 zeigt die Draufsicht der Walze 1 im zweiten Lenkbereich. Der zweite Lenkbereich umfasst einen zweiten Lenkwinkel von 0 < β < 80°, wobei dieser Lenkwinkel von den sich nun in der zweiten Knickachse 16 schneidenden Längsachsen 21, 22 eingeschlossen wird. Fährt die Walze 1 in die Pfeilrichtung 7, so führt der Lenkwinkel β um die zweite Knickachse 16 zu einer Richtungsänderung der Walze 1 nach rechts (in Fahrtrichtung betrachtet). Bei der Betrachtung der reinen Relativbewegung der Rahmen 2, 3 zueinander durch einen sich mit der zweiten Knickachse 16 bewegenden Beobachter schwenken in Fahrtrichtung betrachtet die rechten Seitenkanten 2c, 3c der Rahmen 2, 3 relativ zueinander. Dabei klaffen in Fahrtrichtung betrachtet die linken Seitenkanten 2b, 3b der Rahmen 2, 3 auseinander, so dass sich auch das obere 41 und das untere Drehgelenk 42 des ersten Drehgelenkpaares 40a, deren Drehachsen vorher in der Nullstellung oder im ersten Lenkbereich fluchteten, nun voneinander entfernen. Bei diesem Ausführungsbeispiel schwenkt im zweiten Lenkbereich der Vorderrahmen 2 gegenüber dem stillstehenden Hinterrahmen 3, wenn man den Lenkeinsschlag im Stillstand des Fahrzeugs 1 ausführen würde. Die Drehachsen der Drehgelenke 43, 41, 42 bilden nun ein gleichschenkliges Dreieck mit den Schenkellängen g und dem Winkel β an der Spitze. Auch hier laufen die Vorder- 5 und die Hinterbandage 6 in einer Spur.

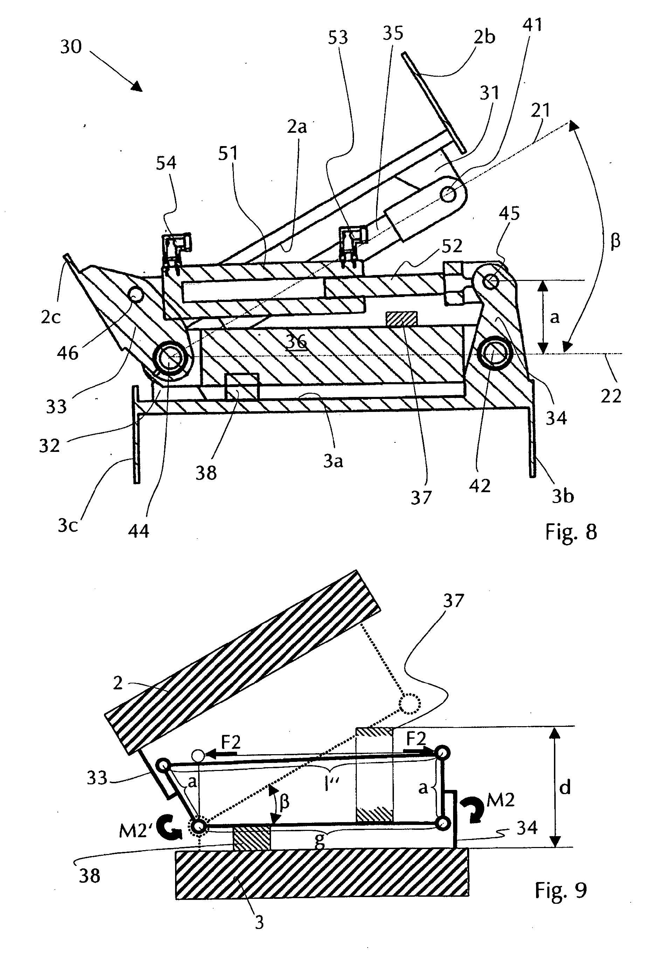

Figur 8 zeigt die Untersicht des Knicklenkgetriebes 30 im zweiten Lenkbereich wie Fig. 7, allerdings mit einem Längsschnitt durch die zweite Ebene E2, um den Lenkzustand näher zu beschreiben. Auslöser für die Lenkbewegung in den zweiten Lenkbereich ist ebenfalls die Betätigung des Lenkantriebs 50. Hierbei wirken im Gegensatz zum Lenkeinschlag in den ersten Lenkbereich die Betätigungskräfte F2 nach außen, d. h. die Kolbenstange 52 des Zylinders 51 strebt das Herausfahren aus dem Zylinder 51 und somit die Verlängerung des Lenkantriebs 50 an. Das Lenkviereck 42, 44, 46, 45 ändert hierbei seine Gestalt derart, dass der Abstand der Drehgelenke 45, 46 von ursprünglich I in der Nullstellung nun auf I" verlängert wird (vgl. Fig. 9).

Figur 9 zeigt analog zu Fig. 6 in vereinfachter Form das Lenkprinzip im zweiten Lenkbereich, wie Fig. 8. Auch hier wird zur besseren Übersicht der Abstand d/2 zwischen dem Vorderrahmen 2 und der Längsachse 22 der Lenkplatte 36 vergrößert. Figur 9 zeigt das Knicklenkgetriebe 30 aus Fig. 8, wobei die maßgebenden Drehgelenke wiederum als Kreise und die Längsachsen der starren Getriebeglieder als Linien dargestellt sind. Zusätzlich sind die wirkenden Betätigungskräfte F2 sowie Lenkmomente M2, M2' eingezeichnet. Ebenso sind die wichtigsten Abmessungen des Lenkvierecks 42, 44, 46, 45 und Abstände I", g, a, d eingetragen. Ferner sind die Anschlagelemente 37, 38 sowie die Rahmen 2, 3 erkennbar.

Ausgehend von der Nullstellung wird die Lenkbewegung in den zweiten Lenkbereich folgendermaßen eingeleitet. Durch die hydraulische Betätigung des Lenkantriebs 50 wirken Betätigungskräfte F2 auf die beiden Anlenkpunkte des Lenkantriebs 50, nämlich die Drehgelenke 45, 46. Durch den Hebelarm mit der Länge a auf dem zweiten Lenkhebel 34 resultiert ein erstes Lenkmoment M2 um das Drehgelenk 42, wobei das Drehgelenk 45 sowie der zweite Lenkhebel 34 zusammen mit dem Hinterrahmen 3 im Wesentlichen gefesselt sind und weder rotatorisch um das Drehgelenk 42 noch translatorisch bewegt werden können. Der zweite Lenkhebel 34, der Hinterrahmen 3, sowie das zweite Anschlagelement 38 zusammen mit der Lenkplatte 36 nehmen die erste, das Moment M2 verursachende Kraft F2 auf, wobei die genannten Maschinenteile im Wesentlichen keine Bewegung ausführen. Auf der gegenüberliegenden Seite wirkt infolge der Kraft F2 mit dem Hebelarm der Länge a ein zweites Lenkmoment M2' um das Drehgelenk 44 auf den ersten Lenkhebel 33, wodurch der mit dem ersten Lenkhebel 33 fest verbundene Vorderrahmen 2 um das Drehgelenk 44 um den Winkel β frei schwenkt. Die Schwenkbewegung des Vorderrahmens 2 relativ zum Hinterrahmen 3 wird über den Verbindungsarm 35 und das obere Drehgelenk 42, welche sich in der ersten Ebene E1 befinden, zusätzlich zwangsgeführt. Die Drehgelenke 43, 44 des zweiten Drehgelenkpaares 40b bilden die zweite Knickachse 16 für den zweiten Lenkbereich. Unabhängig von der Drehrichtung des Vorderrahmens 2 relativ zum Hinterrahmen 3 findet jede relative Drehbewegung der Rahmen 2, 3 im zweiten Lenkbereich immer nur um die zweite Knickachse 16 statt. Die Betätigung des Lenkantriebs 50 führt in Abhängigkeit vom eingestellten Druck zu einer Verschiebung des Drehgelenks 46, insbesondere einer Rotation um das Drehgelenk 44, so dass die variable Seitenlänge des Lenkvierecks von I (Nullstellung) auf I" vergrößert wird. Solange die Bedingung gilt, dass I" > I ist, liegt der Zustand im zweiten Lenkbereich vor. Soll β in Richtung Nullstellung wieder verkleinert werden, so muss das Druckmittel mit Hilfe des ersten Hydraulikanschlusses auf die entgegengesetzte Seite des Kolbens wirken. Wird die Nullstellung erreicht, so gilt β = 0 und I" = I.

## Patentansprüche

1. Knickgelenktes Fahrzeug (1), insbesondere Baufahrzeug, umfassend:
einen Vorder- (2) und einen Hinterrahmen (3);
ein Knicklenkgetriebe (30) mit einem ersten Verbindungsglied (36), wobei das erste Verbindungsglied (36) über zwei Drehgelenke (42, 44) am Vorder- (2) und am Hinterrahmen (3) angelenkt ist;
und einen Lenkantrieb (50), welcher über Anlenkpunkte (45,46) am Vorder- (2) und am Hinterrahmen (3) angelenkt ist;
wobei das Knicklenkgetriebe (30) eine erste und eine zweite vertikale Knickachse (15, 16) aufweist, die voneinander beabstandet angeordnet sind, wobei das Knicklenkgetriebe (30) in einem ersten Lenkbereich zur relativen Verschwenkung des Vorder- (2) und des Hinterrahmens (3) um die erste Knickachse (15) und in einem zweiten Lenkbereich zur relativen Verschwenkung des Vorder- (2) und des Hinterrahmens (3) um die zweite Knickachse (16) ausgebildet ist, wobei der erste und der zweite Lenkbereich über eine Nullstellung voneinander getrennt sind
**dadurch gekennzeichnet,**
**dass** das Knicklenkgetriebe (30) ein zweites Verbindungsglied (35) aufweist, welches über zwei weitere Drehgelenke (41, 43) gegensinnig zum ersten Verbindungsglied (36) am Vorder- (2) und am Hinterrahmen (3) angelenkt ist, wobei die Längsachse (21) des zweiten Verbindungsglieds (35) in der Nullstellung parallel zur Längsachse (22) des ersten Verbindungsglieds (36) ist und wobei die Drehachsen der Drehgelenke (41, 43) des zweiten Verbindungsglieds (35) in der Nullstellung jeweils koaxial zu den Drehachsen der Drehgelenke (42, 44) des ersten Verbindungsglieds (36) angeordnet sind, und
**dass** die Wirkungslinie des Lenkantriebs (50) in der Nullstellung parallel und axial beabstandet zu den Längsachsen (21, 22) der Verbindungsglieder (35, 36) angeordnet ist.

2. Fahrzeug (1) nach Anspruch 1,
**dadurch gekennzeichnet,**
**dass** der Lenkantrieb (50) ein doppeltwirkender Hydraulikzylinder (51) mit einer Kolbenstange (52) ist.

3. Fahrzeug (1) nach einem der vorhergehenden Ansprüche,
**dadurch gekennzeichnet,**
**dass** das Knicklenkgetriebe (30) ein erstes und ein zweites Anschlagelement (37, 38) aufweist, wobei im ersten Lenkbereich das erste Anschlagelement (37) zwischen dem Vorderrahmen (2) und dem ersten Verbindungsglied (36) und im zweiten Lenkbereich das zweite Anschlagelement (38) zwischen dem Hinterrahmen (3) und dem ersten Verbindungsglied (36) anliegt.

4. Fahrzeug (1) nach Anspruch 3,
**dadurch gekennzeichnet,**
**dass** die Anschlagelemente (37, 38) am ersten Verbindungsglied (36) angeordnet sind.

5. Fahrzeug (1) nach einem der vorhergehenden Ansprüche,
**dadurch gekennzeichnet,**
**dass** das Knicklenkgetriebe (30) einen mit dem Vorderrahmen (2) verbundenen ersten Lenkhebel (33) und einen mit dem Hinterrahmen (3) verbundenen zweiten Lenkhebel (34) aufweist, welche in der Nullstellung bezüglich der Längsmittelachse (10) des Fahrzeugs-(1) einander gegenüberliegend angeordnet sind und an welchen der Lenkantrieb (50) über die Anlenkpunkte (45, 46) und das erste Verbindungsglied (36) über die unteren Drehgelenke (42, 44) voneinander beabstandet mit einem Abstand (a), welcher der Länge eines auf dem jeweiligen Lenkhebel (33, 34) befindlichen Hebelarms entspricht, angelenkt sind, wobei durch die Lenkhebel (33, 34) bei einer Betätigung des Lenkantriebs (50) aus einer Betätigungskraft (F1, F2) ein Lenkmoment (M1, M1', M2, M2') resultiert.

6. Fahrzeug (1) nach Anspruch 5,
**dadurch gekennzeichnet,**
**dass** das Knicklenkgetriebe (30) ein Lenkviereck aufweist, dessen Eckpunkte durch die an den Lenkhebeln (33, 34) angeordneten Drehgelenke und Anlenkpunkte (42, 44, 45, 46) und dessen Seiten durch das erste Verbindungsglied (36), den Lenkantrieb (50) sowie die Lenkhebel (33, 34) gebildet werden, wobei zumindest eine Seitenlänge (I, I',I") des Lenkvierecks über eine Längenänderung des Lenkantriebs (50) variabel einstellbar ist.

7. Fahrzeug (1) nach einem der vorhergehenden Ansprüche,
**dadurch gekennzeichnet,**
**dass** das Knicklenkgetriebe (30) ein ebenes Führungsgetriebe ist.

8. Fahrzeug (1) nach einem der vorhergehenden Ansprüche,
**dadurch gekennzeichnet,**
**dass** das erste Verbindungsglied (36) mindestens eine Durchgangsbohrung (39) für Leitungen und/oder Kabeln aufweist.

9. Fahrzeug (1) nach einem der vorhergehenden Ansprüche,
**dadurch gekennzeichnet,**
**dass** es eine Vibrationswalze, insbesondere eine Grabenwalze, ist.

## Claims

1. Pivot-steered vehicle (1), in particular a construction vehicle, comprising:
a front frame (2) and a rear frame (3);
a pivot-steering gear (30) with a first connecting member (36), the first connecting member (36) being connected to the front frame (2) and the rear frame (3) via two rotary joints (42, 44);
and a steering drive (50) that is connected to the front frame (2) and the rear frame (3) via articulation points (45, 46);
the pivot steering gear (30) having a first and a second vertical pivot axis (15, 16) arranged at a distance apart from each other, the pivot steering gear (30) being formed in a first steering range for relative swiveling of the front frame (2) and the rear frame (3) about the first pivot axis (15) and in a second steering range for relative swiveling of the front frame (2) and the rear frame (3) about the second pivot axis (16), the first and the second steering ranges being separated from each other by a neutral position,
**characterized in that**
the pivot-steering gear (30) has a second connecting member (35) that is connected to the front frame (2) and the rear frame (3) via two further rotary joints (41, 43) in an inverse manner with respect to the first connecting member (36), the longitudinal axis (21) of the second connecting member (35) in the neutral position being parallel to the longitudinal axis (22) of the first connecting member (36) and the rotational axes of the rotary joints (41, 43) of the second connecting member (35) in the neutral position each being arranged coaxially with respect to the rotational axes of the rotary joints (42, 44) of the first connecting member (36), and
that the line of the action of the steering drive (50) in the neutral position is arranged parallel to and axially spaced apart from the longitudinal axes (21, 22) of the connecting members (35, 36).

2. Vehicle (1) according to claim 1,
**characterized in that**
the steering gear (50) is a double-acting hydraulic cylinder (51) with a piston rod (52).

3. Vehicle (1) according to any one of the preceding claims,
**characterized in that**
the pivot steering gear (30) has a first and a second stop element (37, 38), in the first steering range the first stop element (37) resting between the front frame (2) and the first connecting member (36) and in the second steering range the second stop element (38) resting between the rear frame (3) and the first connecting member (36).

4. Vehicle (1) according to claim 3,
**characterized in that**
the stop elements (37, 38) are arranged on the first connecting member (36).

5. Vehicle (1) according to any one of the preceding claims,
**characterized in that**
the pivot steering gear (30) has a first steering lever (33) connected to the front frame (2) and a second steering lever (34) connected to the rear frame (3), which steering levers are arranged in the neutral position opposing each other with respect to the longitudinal center axis (10) of the vehicle (1) and to which the steering drive (50) is articulated via the articulation points (45, 46) and the first connecting member (36) is articulated via the lower rotary joints (42, 44) so as to be set apart from each other by a distance (a) corresponding to the length of a lever arm located on the respective steering lever (33, 34), a steering torque (M1, M1', M2, M2') resulting from an actuating force (F1, F2) by way of the steering levers (33, 34) upon actuation of the steering drive (50).

6. Vehicle (1) according to claim 5,
**characterized in that**
the pivot steering gear (30) has a steering square, the corner points of which are formed by the rotary joints and articulation points (42, 44, 45, 46) arranged on the steering levers (33, 34) and the sides of which are formed by the first connecting member (36), the steering drive (50) and the steering levers (33, 34), wherein at least one lateral length (I, I', I") of the steering square can be variably set by altering the length of the steering drive (50).

7. Vehicle (1) according to any one of the preceding claims,
**characterized in that**
the pivot steering gear (30) is a flat guide gear.

8. Vehicle (1) according to any one of the preceding claims,
**characterized in that**
the first connecting member (36) has at least one passage borehole (39) for lines and/or cables.

9. Vehicle (1) according to any one of the preceding claims,
**characterized in that**
it is a vibratory roller, in particular a trench roller.

## Revendications

1. Véhicule articulé (1), en particulier pour le bâtiment et les travaux publics, comprenant :
un châssis avant (2) et un châssis arrière (3) ;
un mécanisme de direction articulé (30) avec un premier élément de liaison (36), le premier élément de liaison (36) étant relié au châssis avant (2) et au châssis arrière (3) par l'intermédiaire de deux joints rotatifs (42, 44) ;
et une commande de direction (50) qui est reliée au châssis avant (2) et au châssis arrière (3) par l'intermédiaire de deux points d'articulation (45, 46) ;
le mécanisme de direction articulé (30) ayant un premier et un second axes de pivot verticaux (15, 16) disposés à distance l'un de l'autre, le mécanisme de direction articulé (30) étant conformé selon une première plage de direction pour un pivotement relatif du châssis avant (2) et du châssis arrière (3) autour du premier axe de pivot (15) et selon une seconde plage de direction pour un pivotement relatif du châssis avant (2) et du châssis arrière (3) autour du second axe de pivot (16), la première et la seconde plages de direction étant séparées l'une de l'autre par une position neutre,
**caractérisé en ce que**
le mécanisme de direction articulé (30) possède un second élément de liaison (35) qui est relié au châssis avant (2) et au châssis arrière (3) par l'intermédiaire de deux autres joints rotatifs (41, 43) de manière inverse par rapport au premier élément de liaison (36), l'axe longitudinal (21) du second élément de liaison (35) dans la position neutre étant parallèle à l'axe longitudinal (22) du premier élément de liaison (36) et les axes de rotation des joints rotatifs (41, 43) du second élément de liaison (35) dans la position neutre étant chacun disposés coaxialement par rapport aux axes de rotation des joints rotatifs (42, 44) du premier élément de liaison (36), et
**en ce que** la ligne d'action de la commande de direction (50) dans la position neutre est disposée parallèlement aux, et axialement séparés des, axes longitudinaux (21, 22) des éléments de liaison (35, 36).

2. Véhicule (1) selon la revendication 1,
**caractérisé en ce que**
la commande de direction (50) est un vérin hydraulique (51) à double action avec une tige (52) de piston.

3. Véhicule (1) selon l'une quelconque des revendications précédentes,
**caractérisé en ce que**
le mécanisme de direction articulé (30) présente un premier et un second éléments de butée (37, 38), dans la première plage de direction, le premier élément de butée (37) reposant entre le châssis avant (2) et le premier élément de liaison (36), et, dans la seconde plage de direction, le second élément de butée (38) reposant entre le châssis arrière (3) et le premier élément de liaison (36).

4. Véhicule (1) selon la revendication 3,
**caractérisé en ce que**
les éléments de butée (37, 38) sont situés sur le premier élément de liaison (36).

5. Véhicule (1) selon l'une quelconque des revendications précédentes,
**caractérisé en ce que**
le mécanisme de direction articulé (30) possède un premier levier de direction (33) relié au châssis avant (2) et un second levier de direction (34) relié au châssis arrière (3), lesdits leviers de direction étant, dans la position neutre, disposés opposés l'un à l'autre par rapport à l'axe médian longitudinal (10) du véhicule (1) et auxquels la commande de direction (50) est articulée par l'intermédiaire des points d'articulation (45, 46) et le premier élément de liaison (36) est articulé par l'intermédiaire des joints rotatifs inférieurs (42, 44), de manière à être séparés l'un de l'autre d'une distance (a) correspondant à la longueur d'un bras de levier situé sur le levier de direction respectif (33, 34), un couple de direction (M1, M1', M2, M2') résultant d'une force d'actionnement (F1, F2) grâce aux leviers de direction (33, 34) lors de l'actionnement de la commande de direction (50).

6. Véhicule (1) selon la revendication 5,
**caractérisé en ce que**
le mécanisme de direction articulé (30) possède un quadrilatère articulé, dont les points angulaires sont formés par les joints rotatifs et les points d'articulations (42, 44, 45, 46) situés sur les leviers de direction (33, 34), et dont les côtés sont formés par le premier élément de liaison (36), par la commande de direction (50) et par les leviers de direction (33, 34), au moins une longueur latérale (I, I', I") du quadrilatère articulé pouvant être réglée de manière variable en modifiant la longueur de la commande de direction (50).

7. Véhicule (1) selon l'une quelconque des revendications précédentes,
**caractérisé en ce que**
le mécanisme de direction articulé (30) est un mécanisme de guidage plat.

8. Véhicule (1) selon l'une quelconque des revendications précédentes,
**caractérisé en ce que**
le premier élément de liaison (36) possède au moins un alésage débouchant (39) pour des conduites et/ou des câbles.

9. Véhicule (1) selon l'une quelconque des revendications précédentes,
**caractérisé en ce que**
celui-ci est un rouleau vibrant, en particulier un rouleau de tranchée.
